# EUROPEAN PATENT APPLICATION

(11) **EP 2 684 784 A1**
(43) Date of publication of application: **15.01.2014**
(21) Application number: 12176430.2
(22) Date of filing: 13.07.2012
(51) Int. Cl.: B62J 7/06, B62J 9/00

(54) **Bicycle handle bar accessory coupling device**

(71) Applicant: Thule IP AB, 214 31 Malmö (SE)
(72) Inventor: Armstrong, Timothy, 9011 Dunedin (NZ); Gibson, Gary, 9013 Dunedin (NZ); Maguire, Patrick David, 9011 Dunedin (NZ); Noer, Michael, Stillwater, 55082 (US)
(74) Representative: Valea AB

(57) **Abstract**

A coupling device (1) for indirect attachment of an accessory to a bicycle handle bar (5), the coupling device (1) comprising a handle bar coupling member (2) and an accessory coupling member (3), the handle bar coupling member (2) comprising fastener elements for rigid fastening of the coupling device (1) to the bicycle handle bar (5) and the accessory coupling member (3) having at least two different accessory fastening positions. The different accessory fastening positions are arranged on a curved trajectory extending radially around the bicycle handle bar when the coupling device (1) is attached to the bicycle handle bar.

## Description

### TECHNICAL FIELD

The invention relates to a device for indirect attachment of an accessory to a bicycle handle bar. The coupling device comprises a handle bar coupling member and an accessory coupling member. The handle bar coupling member comprises fastener elements for rigid fastening of the coupling device to the bicycle handle bar and the accessory coupling member has at least two different accessory fastening positions.

### BACKGROUND OF THE INVENTION

Devices for fastening of accessories such as bags, map holders, lights, bells, and other equipment to a bicycle handle bar have been previously described. As the available space for attaching accessories on a bicycle handle bar is limited, the handle bar tends to become crowded with holders and attachment devices.

DE 10 2010 011 266 A1 discloses a device for attaching two accessories to a bicycle handle bar. The device in DE 10 2010 011 266 A1 has two different accessory attachment arrangements carried by a single fastener device which is attached to the bicycle handle bar. The attachment arrangements may, for instance, be a first attachment arrangement for a bicycle handle bag at the front of the device and a second attachment arrangement for a bicycle light arranged above and slightly behind the first arrangement. The second arrangement may have a cylindrical part with a diameter corresponding to the handle bar diameter and may be provided with additional fastener elements which are inserted at the ends of the cylindrical part.

Although the device in DE 10 2010 011 266 A1 allows for more than one accessory being attached along the same stretch of a handle bar, thus economizing with the limited room on the handle bar, it has a complicated structure and requires excessive manipulation in order to fit all parts together in a correct relative position and to attach the different accessories in the correct places. Furthermore, the device in DE 10 2010 011 266 A1 offers only limited adjustability of the relative positions of the accessories once they have been attached to the device.

Accordingly, there remains a need for a simplified bicycle handle bar coupling device allowing multiple accessories to be attached along the same stretch of a bicycle handle bar and offering easy adjustment of the position of each accessory.

### SUMMARY OF THE INVENTION

In accordance with the invention is offered a coupling device for indirect attachment of an accessory to a bicycle handle bar, the coupling device comprising a handle bar coupling member and an accessory coupling member, the handle bar coupling member comprising fastener elements for rigid fastening of the coupling device to the bicycle handle bar and the accessory coupling member having at least two different accessory fastening positions which are arranged on a curved trajectory extending radially around the bicycle handle bar when the coupling device is attached to the bicycle handle bar.

The accessory coupling member has a transverse axis which transverse axis is arranged to coincide with a bicycle handle bar axis when the coupling device is mounted on the bicycle handle bar. When the accessory coupling device is correctly mounted on the bicycle handle bar, the curved trajectory on which the accessory fastening positions are found and which extends radially around the transverse axis of the accessory coupling member will also extend radially around the bicycle handle bar. In order to provide high versatility with regard to the number and location of the accessory fastening positions, the curved trajectory may occupy at least 90° of a full revolution around the transverse axis of the accessory coupling member.

The curved trajectory on which the accessory fastening positions are found may be defined by the shape of the accessory coupling member.

The accessory coupling member of the invention is a unitary element having multiple fastening positions i.e. two or more fastening positions allowing a user to select a suitable position for attaching one or more bicycle accessories as defined herein.

The accessory coupling member may comprise a curved guiding rail wherein the trajectory on which the attachment positions are arranged is defined by the shape of the curved guiding rail.

The trajectory may have a uniform radius of curvature or a non-uniform radius of curvature implying that when the trajectory is defined by the shape of a curved guiding rail, the guiding rail may have a uniform radius of curvature or may have a non-uniform radius of curvature. The curvature and length of the trajectory may be selected such that the coupling device is particularly suitable for use with specific bicycle handle accessories. For instance, when mounted on a bicycle handle bar, the coupling device may have an attachment trajectory having a relatively larger radius of curvature on a part facing upwards and/or to the rear of the bicycle in order to present a relatively flat attachment portion towards a rider of the bicycle and a relatively smaller radius of curvature on a part facing to the front of the bicycle, i.e. away from a rider of the bicycle. An arrangement of this kind may be suitable when wishing to attach a device which should be viewable and/or accessible for manipulation by a user when riding the bicycle. Such rider-interactive devices include electronic equipment having a display, map holders, bicycle lights, etc. which are commonly attached on top of the handle bar, or towards the rider-facing side, i.e. the rear of the handle bar. The front part of the attachment trajectory, may be shaped to present a greater curvature in order to allow for vertical or generally vertical attachment of a hanging accessory at the front of the bicycle. Such hanging accessories include conventional bicycle bags and baskets, as well as specialized trunks, pods and bags, e.g. lap-top bags.

The accessory coupling member may comprise two or more curved guiding rails, such as two to four curved guiding rails. Furthermore, the accessory coupling member may comprise an accessory fastener element for fastening of an accessory to the accessory coupling member.

The guiding rails may be provided with teeth or cogs arranged to interact with an accessory fastener element for step-wise adjustability of the accessory fastener element along the guiding rail or guiding rails. An accessory fastener element is an intermediate fastener element serving to couple the accessory to the guiding rails by means of a mating fastener element on the accessory. Alternatively, a fastener element on the accessory may be configured for direct attachment to the one or more guiding rails.

Two identically curved guiding rails may be arranged parallel to each other with a gap for receiving a fastener element between the rails. The edges of the rails facing towards each other may be provided with teeth or cogs allowing step-wise movement of the fastener element along the track defined between the guiding rails.

Non-step-wise adjustment of a fastener element along a guiding rail or between two guiding rails may be achieved by a fastener element that is frictionally engaged with the guiding rail or guiding rails. In order to increase/decrease friction between the guiding rail or guiding rails and the fastener element, the fastener element may be clamped onto a guiding rail or between two guiding rails such that the connection between the fastener element and the guiding rail or guiding rails is tensioned by the fastener element being pressed against the guiding rail or guiding rails. If desired, means for adjusting the amount of tensioning may be provided, so that the tensioning may be relieved e.g. by manually opening a clamp or pressing together a pair of fastener legs on a fastener elements in order to be able to easily move the fastener element to a new position along the guiding rail or guiding rails.

The one or more guiding rails and any fastener elements may be made from any suitable material such as plastic or metal. Suitable metals include light-weight metals such as titanium and aluminium.

The accessory coupling member may comprise more than one accessory fastener element, such as up to three accessory fastener elements allowing attachment of up to three different accessories.

When more than one accessory fastener element is provided on the accessory coupling device, the accessory fastener elements may include one or more fastener element located at a fixed accessory fastening position. However, at least one accessory fastener element may be movable along the trajectory between different accessory fastening positions.

Locking members may be arranged at the different accessory fastening positions for releasably locking a fastener element in the different accessory fastening positions. The locking members may be in the form of teeth or cogs or may be locking pins, locking buttons, clamps or any other suitable locking device allowing releasable locking of the fastener element in a selected attachment position.

Multiple accessory fastening positions may be arranged along the trajectory with the accessory fastener element being slidably movable along the trajectory between the multiple accessory fastening positions.

The multiple accessory fastening positions may be arranged at predetermined locations along the trajectory. The predetermined accessory fastening positions may be provided by any suitable position-determining means such as notches, teeth, or hooks arranged along the trajectory allowing step-wise movement between the fastening positions. The fastening positions may be equidistantly arranged along the trajectory or may be arranged with varying spacing between the fastening positions. The position-determining means can be designed to also serve as locking means ascertaining that the accessory fastener element remains in a selected position. Accordingly, the position-determining means may be configured to interact with the accessory fastening element to create a connection that can only be broken by applying a greater force than would normally arise during use of the accessory coupling devise. The strength of the connection between the position-determining means and the accessory fastener element is determined by the physical design of the interacting elements such as the depth of grooves or notches and the height of teeth or other protrusions. As an example, when the accessory is a bicycle bag or similar that may be designed to carry objects of a total weight of several kilograms, the force required to break the connection and move the fastener element should be high enough to counteract gravity. However, it is important that the connection force is sufficiently low to allow the connection to be manually broken, so that the position of an accessory may be easily adjusted. For some accessories, such as electronic displays, map holders, lights, etc. it may even be an advantage if the position of the accessory can be easily adjusted while riding the bicycle. Accordingly, the connecting device may be designed to only hold lighter equipment securely in a selected position while heavier accessories such as bags may be placed at an end position on the trajectory where they may be hindered from moving out of position under the influence of gravity by a stop element such as a stop bar or stop knob.

The multiple fastening positions for an accessory fastener element on the coupling device or a fastener element on a bicycle accessory may alternatively be arranged continuously along the trajectory so that the fastener element is slidably movable along said trajectory in a non-stepwise manner allowing a user full freedom to select a suitable attachment position along the trajectory. In order to ascertain that the accessory fastener element will remain in the selected position, the accessory coupling member preferably comprises locking means for locking the accessory fastener element in the selected position. Such locking means include clamping arrangements, screws, locking pins, friction increasing elements etc. as known in the art.

The trajectory may extend at least 180°, 220°, 270°, or 300° around the transverse axis and may even extend up to a full 360° revolution around the transverse axis.

### DEFINITIONS

By a bicycle accessory is meant any item that a user may wish to attach to a bicycle and in particular to a bicycle handle bar, such as a bicycle bag or bicycle basket, a bottle holder, a mobile phone holder, a bicycle light, a map holder, etc. and further including all types of electronic displays and other electronic equipment for use with a bicycle such as a navigator, a speedometer, an interactive pad, etc.

By a rigid coupling as used herein, is implied a coupling between two elements which coupling inhibits relative movement between the elements during in-use conditions for which the coupling is designed. Accordingly, in a bicycle accessory coupling device of the invention, the coupling between the coupling device and a bicycle handle bar should be a rigid coupling ascertaining that the coupling device remains attached to the handle bar in the same position throughout the use of the coupling device for coupling of one or more accessories to the handle bar.

By a unitary element as used herein, is implied an element that is assembled by a manufacturer and that is delivered to an end user as a single component.

### BRIEF DESCRIPTION OF THE DRAWINGS

The invention will be described in greater detail with reference to the appended drawings in which:
- Figure 1: shows a perspective view of a coupling device mounted on a bicycle handle bar and with two accessories attached to the bicycle handle bar via the coupling device;
- Figure 2: shows a top view of a bicycle handle bar with an accessory coupling device mounted on the bicycle handle bar;
- Figure 3: shows a front view of a bicycle handle bar with an accessory coupling device mounted on the bicycle handle bar;
- Figures 4-6: show side views of a bicycle handle bar with an accessory coupling device mounted on the bicycle handle bar and a bicycle accessory attached to the accessory coupling device;
- Figure 7: shows a perspective view of a coupling device mounted on a bicycle handle bar and with two accessories in the process of being attached to the bicycle handle bar via the coupling device;
- Figure 8: shows a perspective view of a coupling device mounted on a bicycle handle bar and including an accessory fastener element; and
- Figure 9: shows a side view of the coupling device in Fig. 8.

### DETAILED DESCRIPTION

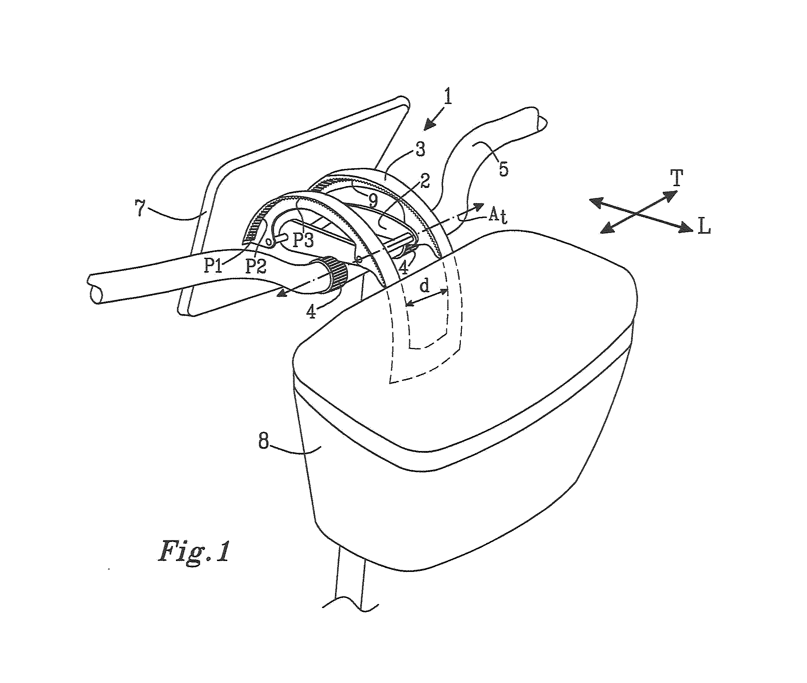

The bicycle handle bar coupling device 1 shown in Fig. 1, comprises a handle bar coupling member 2 and an accessory coupling member 3. The handle bar coupling member comprises handle bar fastener elements 4 for fastening of the coupling device to a bicycle handle bar 5. The handle bar fastener elements 4 are shown schematically in Fig. 1 and may be any type of fastener element such as a clamp or similar that will provide a rigid and secure attachment of the coupling device 1 to the bicycle handle bar 5.

The coupling device 1 has a longitudinal direction, L, corresponding to the longitudinal direction of the bicycle on which it is mounted and a transverse direction, T, perpendicular to the longitudinal direction, L, and generally coinciding with the direction of extension of the bicycle handle bar 5.

The accessory coupling member 3 comprises two parallel guiding rails 6 which are curved in the longitudinal direction, L, and arranged at a distance, d, from each other in the transverse direction, T, of the coupling device 1.

The guiding rails 6 form a track to which one or more bicycle accessories 7,8 may be directly or indirectly attached. In the example shown in Fig. 1, the accessories are shown as an electronic interactive pad 7 facing to the rear of the coupling device 1 and of the bicycle and a bicycle bag 8 facing towards the front of the coupling device and of the bicycle. The attachments between the accessories 7,8 and the guiding rails 6 is preferably such that the accessories can be moved or slid along the guiding rails 6. The shape of the guiding rails 6 defines the shape of a curved trajectory along which the accessories 7,8 can be moved. The trajectory has multiple accessory fastening positions p₁, p₂, p₃, ..., defined by multiple teeth 9 arranged along inner edges of the guiding rails 6 and interacting with corresponding teeth or ridges on a fastener element which can either be part of the coupling device 1 or be a fastener element on the accessory. The fastener elements are not shown in Fig. 1.

The handle bar coupling member 2 has a transverse axis, At, in a transverse direction of the coupling device. The transverse axis, At, of the handle bar coupling member 2 coincides with the axis of extension of the handle bar 5 in the area where the coupling device 1 is mounted on the handle bar 5. The curved trajectory formed by the guiding rails 6 is shown to extend radially around the transverse axis, At, of the handle bar coupling member 2 and to occupy approximately at least 180° of a full revolution around the transverse axis, At, of the handle bar coupling member 2. Furthermore, the guiding rails 6 are shown to extend further downward on the front side of the coupling device 1 than on the rear side of the coupling device 1, allowing the bicycle bag 8 to be hung at a position below the bicycle handle bar 5 and the electronic interactive pad 7 to be positioned where it can be easily seen and accessed by a rider of the bicycle.

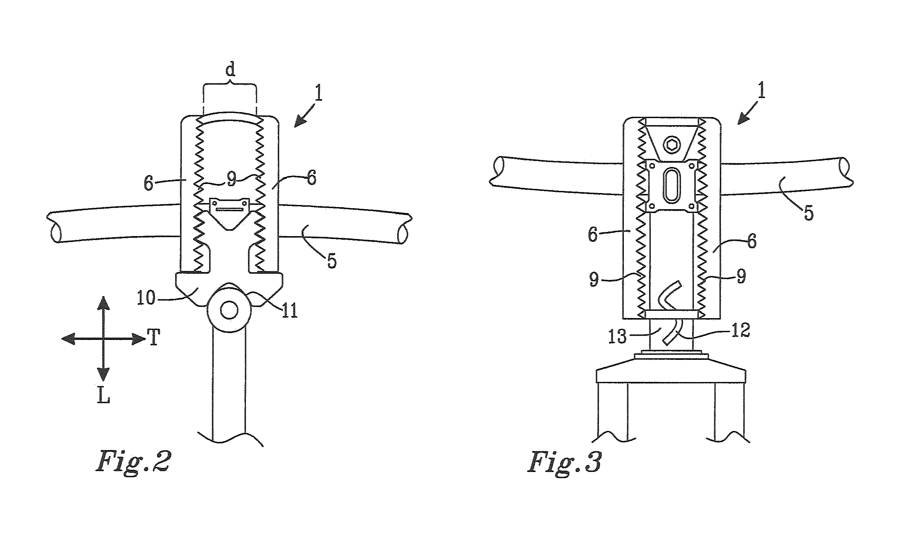

Fig. 2 shows a top view of a bicycle handle bar 5 with an accessory coupling device 1 mounted on the handle bar 5. As can be seen in Fig. 2, the configuration of the coupling device 1 is such that it interferes minimally with any brake and gear cables extending across the front of the bicycle.

The accessory coupling device 1 shown in Fig. 2 is shown to comprise two toothed guiding rails 6 extending in the longitudinal direction, L, and placed at a distance, d, from each other in the transverse direction, T, of the coupling device 1. The teeth 9 of the guiding rail are shown to be directed into the gap formed between the guiding rails 6. An accessory coupling member 10 is held between the guiding rails 6 and can be moved stepwise between the teeth 9 along the guiding rails 6. The teeth may be equidistantly placed along the guiding rails 6 or may be places with different spacing along the length of the guiding rails. It may, for example, be desirable to have less spacing between the teeth at the rear portion of the coupling device 1 than at the front, as the rear portion of the coupling device 1 will normally be used for carrying an accessory for which the exact mounting position is important and for which there may be a desire to make fine adjustments to the position and/or the angle of the accessory in relation to a rider of the bicycle. The accessory coupling member 10 comprises an accessory fastener element 11 which is designed to engage with a corresponding fastener element on the bicycle accessory. Alternatively, the accessory may carry a fastener element that can be directly coupled to the guiding rails 6.

Fig. 3 shows a front view of an accessory coupling device 1 comprising parallel guiding rails 6 comprising teeth 9 along the opposing edges of the guiding rails 6. The portion of the guiding rails 6 extending downwardly at the front of the bicycle handle bar 5 is particularly well suited for attaching hanging accessories, such as bicycle bags. The skeletal construction of the coupling device 1 allows quick and easy access to all fastener components on the coupling device 1 and does only minimally obscure a logotype 12 on the front rod 13 of the bicycle.

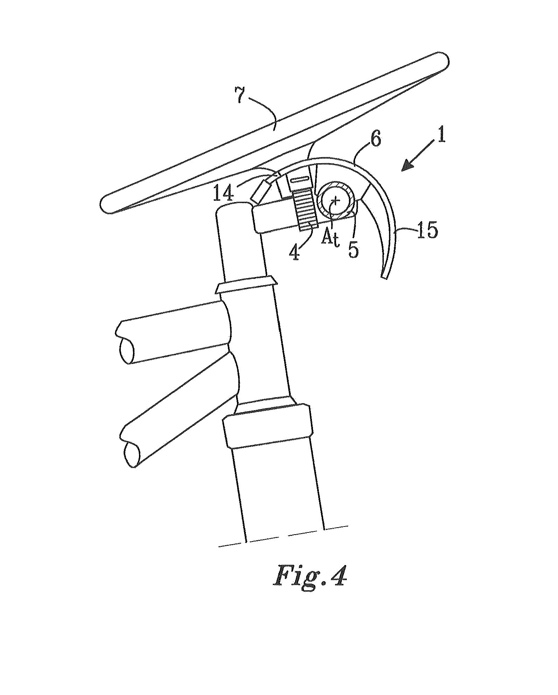

In Fig. 4 is shown a side view of an accessory coupling device 1 mounted on a bicycle handle bar 5 by means of a handle bar fastener element 4 and with an accessory 7 in the form of an electronic pad or similar device attached to a rear/top portion of a curved guiding rail 6 or a pair of parallel guiding rails 6. The accessory 7 is mounted on the coupling device 1 so that it is movable along the trajectory defined by the shape of the guiding rail 6 or guiding rails 6. This allows a user to adjust the position of the accessory along the rail or rails 6 in order to obtain an optimal viewing angle when the accessory 7 is placed towards the rear part 14 of the guiding rail or rails 6. The user is also provided with the option of sliding the accessory 7 all the way to the front part 15 of the rail or rails 6 so that the accessory 7 will be facing forward on the bicycle. A forward position of the accessory 7 may be desired in order to display e.g. a racing number at the front of the bicycle or to simply be able to move the accessory 7 away from the rider of the bicycle. The accessory coupling device 1 shown in Fig. 4 allows for approximately 180° adjustment of an accessory 7 around the transverse axis, At, through the coupling device 1.

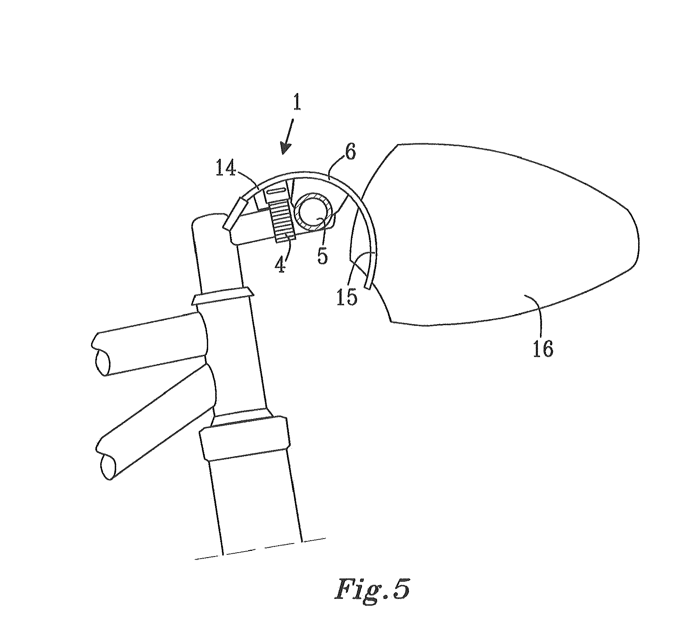

Fig. 5 shows a side view of an accessory coupling device 1 mounted on a bicycle handle bar 5 by means of a handle bar fastener element 4 and with a storage pod 16 attached to the front part 15 of a guiding rail or guiding rails 6 of the coupling device 1. The storage pod 16 is attached at an attachment site where it is out of the way of the hands of a bicycle rider. Furthermore, the accessory coupling device 1 still has room for attaching one or more additional accessories towards the rear part 14 of the guiding rail or guiding rails 6.

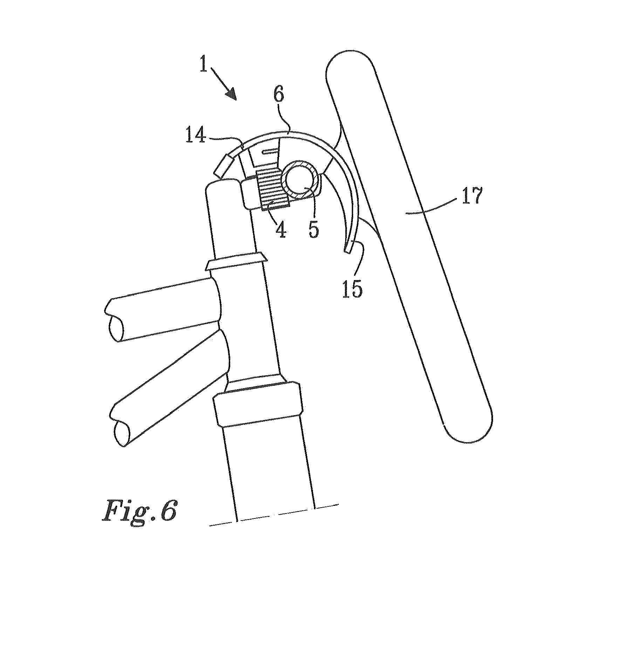

In Fig. 6 is shown a side view of an accessory coupling device 1 mounted on a bicycle handle bar 5 mounted on a bicycle handle bar 5 by means of a handle bar fastener element 4 and with a lap-top bag 17 attached to the front part 15 of a guiding rail or guiding rails 6 of the coupling device 1. The angle of the lap-top bag 17 in relation to the bicycle handle bar 5 can be easily adjusted by moving the bicycle bag and/or a coupling member (not shown) along the guiding rail or guiding rails 6.

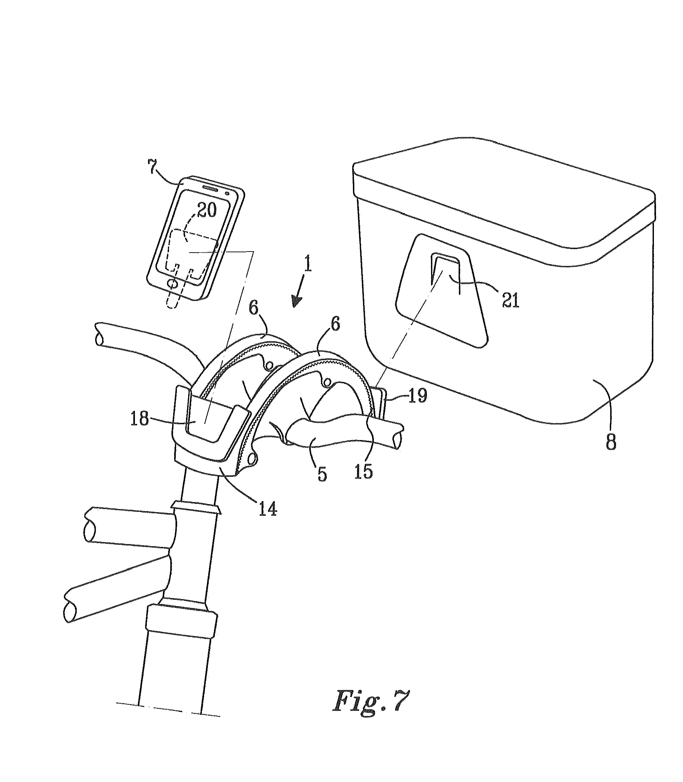

As a non-limiting example, Fig. 7 shows an accessory coupling device 1 comprising two parallel curved guiding rails 6, as disclosed herein. The coupling device 1 in Fig. 7 has a first coupling member 18 positioned at an attachment site at the rear part 14 of the coupling device 1 and a second coupling member 19 positioned at an attachment site at the front part 15 of the coupling device 1. The first coupling member 18 is designed as a "slide-in" receiving coupling member for engagement with a corresponding protruding coupling member 20 on a first accessory 7. The first accessory 7 may be a smaller/lighter accessory such as an electronic pad, a mobile phone, a GPS or similar. The second coupling member 19 is designed as a "slide-over" coupling member for engagement with a corresponding coupling member 21 on a second accessory 8. The second accessory 8 may be a larger/heavier accessory such as a trunk, a bag, a pod, a basket, or similar. Both the first and second coupling members 18,19 are movable along the trajectory defined by the curve shape of the guiding rails 6 to allow for adjustment of the position and/or the angle of the accessories 7,8.

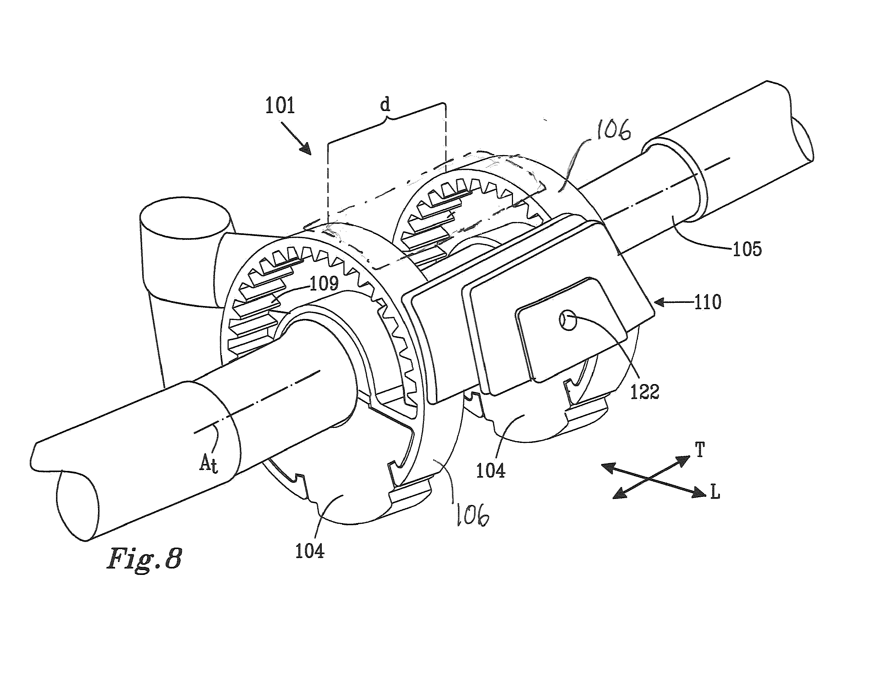

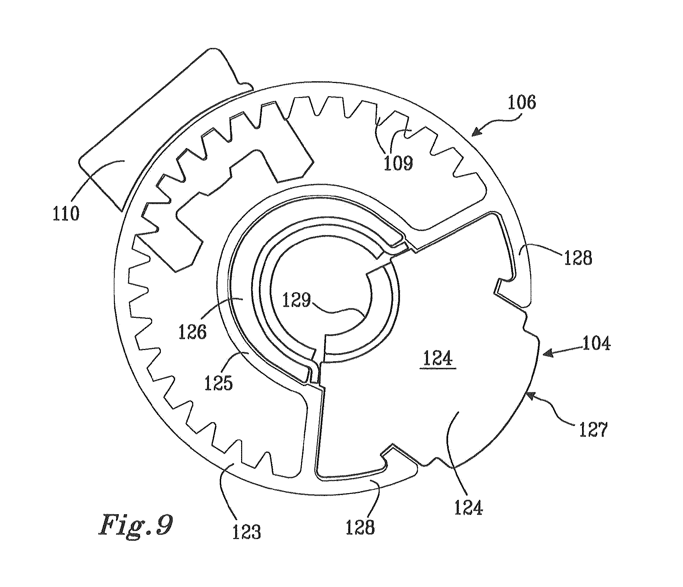

The accessory coupling device 101 shown in Figs. 8 and 9 is similar to the coupling devices in Figs. 1-7 in that it comprises two curved guiding rails 106 attached parallel to each other in the longitudinal direction L of the coupling device 1 and with a gap of a length d between the guiding rails 106 in the transverse direction T. The guiding rails 106 are provided with teeth 109 in order to provide step-wise adjustability of a coupling member 110. The accessory coupling device 1 is shown in Fig. 8 while being attached to a bicycle handle bar 105 by means of two handle bar fastener elements 104. The guiding rails 106 have a uniform radius of curvature and extend almost all the way around the transverse axis Aₜ of the coupling device 1 and bicycle handle bar 105. The full circle around the transverse axis At is only broken by the handle bar fastener elements 104 arranged at the lower part of the coupling device 1 as is best seen in Fig. 9.

The accessory coupling member 110 may be designed to be coupled to a corresponding coupling member on a bicycle bag or similar carrier device and is provided with locking elements 122 for locking the accessory coupling member 110 in a desired position or attachment site along the trajectory defined by the curved guiding rails 106. The locking elements 122 may be a bolt, screw, clamp, or similar that may be loosened in order to move the accessory coupling member 110 along the guiding rails 106 and that may be tightened when the accessory coupling member 110 is in the desired position.

Optionally, the accessory coupling member 110 may be provided with a release button enabling the accessory coupling member 110 to be released from the handle bar, or just displaced.

The accessory coupling device 101 in Figs. 8 and 9 is shown with only a single accessory coupling member 110. However, the accessory coupling devices disclosed herein may be provided with means for coupling of two or more accessories to a single coupling device, as indicated with dashed lines in figure 8, for example enabling up to three accessories to be mounted on the same coupling device.

Fig. 9 shows a side view of the accessory coupling device 101 in Fig. 8. The accessory coupling device 101 comprises a profile part 123 made of a shape stable and durable material such as metal or hard plastic, and a clamping member 124 which is designed to cooperate with the profile part 123 for fastening of the accessory coupling device 101 on a bicycle handle bar. The handle bar fastener element 104 of the accessory coupling device 101 is shown to comprise a curved inner part 125 which is shown to be formed integral with one of the guiding rails 106 and to be concentrically arranged radially inside of the guiding rail 106. The curved inner part 125 is clad with an elastically compressible insert 126. The thickness, or the material or optionally materials if more than one material is used, of the compressible insert 126 can be selected depending on the diameter of the bicycle handle to which the accessory coupling device 101 is to be mounted. The profile part 123 of the accessory coupling device 101 has a closed end constituted by the guiding rail 106 and the curved inner part 125 and an open end allowing the accessory coupling device 101 to be fitted on a bicycle handle bar with by inserting the bicycle handle bar into the curved inner part 125 of the coupling device 101 through a gap 127 between two hook-shaped legs 128 arranged on the profile part 123 on each side of the gap 127. The clamping member 124 may comprise a body of a rigid, material, such as glass-reinforced polyacrylate or polyamide, stainless steel, or similar materials which is provided with clamping surfaces 129 for pressing against the bicycle handle bar.

The handle bar fastener element 104 in Figs. 8 and 9 is particularly well suited for secure and rigid mounting of the accessory coupling device 101 on a bicycle handle bar. However, the shown handle bar fastener element should not be considered limiting to the invention, as any other type of suitable fastener element known to a person skilled in the art may be used.

## Claims

1. A coupling device (1) for indirect attachment of an accessory to a bicycle handle bar (5), said coupling device (1) comprising a handle bar coupling member (2) and an accessory coupling member (3), said handle bar coupling member (2) comprising fastener elements for rigid fastening of said coupling device (1) to said bicycle handle bar (5) and said accessory coupling member (3) having at least two different accessory fastening positions, **characterized in that** said different accessory fastening positions are arranged on a curved trajectory extending radially around said bicycle handle bar when said coupling device (1) is attached to said bicycle handle bar.

2. Coupling device (1) according to claim 1, wherein said curved trajectory extends radially at least 90° around said bicycle handle bar when said coupling device (1) is attached to said bicycle handle bar.

3. Coupling device (1) according to claim 1 or 2, wherein said accessory coupling member (3) comprises a curved guiding rail (6) and said curved trajectory is defined by the shape of said curved guiding rail (6).

4. Coupling device (1) according to claim 3, wherein said curved guiding rail (6) has a uniform radius of curvature.

5. Coupling device (1) according to claim 3, wherein said curved guiding rail (6) has a non-uniform radius of curvature.

6. Coupling device (1) according to any one of claims 2-5, wherein said accessory coupling member (3) comprises two or more curved guiding rails (6), such as two to four curved guiding rails (6).

7. Coupling device (1) according to any one of the preceding claims, wherein said accessory coupling member (3) comprises an accessory fastener element (18,20) for fastening of an accessory to said accessory coupling member (3).

8. Coupling device (1) according to claim 7, wherein said accessory coupling member (3) comprises up to three accessory fastener elements.

9. Coupling device (1) according to claim 7 or 8, wherein at least one accessory fastener element (18,20) is movable along said curved trajectory between said different accessory fastening positions.

10. Coupling device (1) according to claim 8, wherein locking members are arranged on said coupling device for releasably locking said accessory fastener element (18,20) in said different accessory fastening positions.

11. Coupling device (1) according to any one of the preceding claims, wherein multiple accessory fastening positions (9) are arranged along said curved trajectory and wherein said accessory fastener element is slidably movable along said curved trajectory beween said multiple accessory fastening positions.

12. Coupling device (1) according to claim 11, wherein said multiple accessory fastening positions are arranged at predetermined locations along said curved trajectory.

13. Coupling device (1) according to claim 12, wherein said predetermined accessory fastening positions are provided by notches, teeth, or hooks arranged along said curved trajectory.

14. Coupling device (1) according to claim 11, wherein said multiple fastening positions for said accessory fastener element are arranged continuously along said curved trajectory and wherein said accessory fastener element is slidably movable along said curved trajectory in a non-stepwise manner.

15. Coupling device (1) according to any one of the preceding claims, wherein said curved trajectory extends at least 180° around said bicycle handle bar when said coupling device (1) is attached to said bicycle handle bar.
